# EUROPEAN PATENT SPECIFICATION

(11) **EP 4 095 879 B1**
(45) Date of publication and mention of the grant of the patent: **30.07.2025**
(21) Application number: 21175845.3
(22) Date of filing: 26.05.2021
(51) Int. Cl.: H01H 47/00, H01H 47/32, A47J 36/32, H01H 9/54

(54) **CONTROL CIRCUIT FOR PREVENTING AN UNATTENDED START OF A MOTOR OF AN APPLIANCE**
STEUERSCHALTUNG ZUR VERHINDERUNG EINES UNBEAUFSICHTIGTEN STARTS EINES MOTORS EINES GERÄTES
CIRCUIT DE COMMANDE POUR EMPÊCHER UN DÉMARRAGE SANS SURVEILLANCE D'UN MOTEUR D'UN APPAREIL

(43) Date of publication of application: 30.11.2022
(73) Proprietor: BSH Hausgeräte GmbH, 81739 München (DE)
(72) Inventor: Blatnik, Gregor, 2381 Podgorje (SI); Brinovsek, Luka, 2259 Ivanjkovci (SI); Pacnik, Roman, 2383 Smartno pri Slovenj Gradcu (SI)

(56) References cited:
- EP-A1- 3 771 382
- JP-A- S59 228 233
- US-A- 4 769 737
- US-A- 4 857 758

## Description

The present document relates to a household and/or kitchen appliance. In particular, the present document relates to a control circuit for preventing an unattended start of a motor that drives an attachment or tool of a household appliance.

A kitchen appliance may be used with various different tools for performing different processing tasks of a food item which is placed within the receptacle, in particular within the bowl, of the appliance. Example tools are a knife, a shredder, a dough hook, etc.

The kitchen appliance may be configured to provide a guided cooking function to guide a user of the appliance through different processing steps of a recipe for preparing a processed food item. In this context, the kitchen appliance may be configured to automatically operate the motor for driving a tool which is attached to the kitchen appliance.

US 4 857 758 A describes a coffee maker with a cycle timer. US 4 769 737 A describes a circuit for driving a relay. JP S59 228233 A describes a camera with a relay for controlling the rewinding motor of the camera. EP 3 771 382 A1 describes an appliance with a locking function.

The present document addresses the technical problem of increasing the safety of an appliance which is configured to automatically operate a tool. The technical problem is solved by the independent claim. Preferred examples are described in the dependent claims.

According to the invention a control circuit configured to control a relay for activating an electric motor, of a household appliance, is described. The appliance may comprise a receptacle with a rotatable tool, such as a knife, a dough hook, a shredder or a mixing tool. The motor may be configured to drive the rotatable tool. The appliance may be a kitchen appliance, in particular a kitchen machine or a kitchen robot appliance. Alternatively, or in addition, the kitchen appliance may be a guided cooking appliance and/or a cook processor. In other words, the appliance may be configured to provide a guided cooking functionality. In this context, the appliance, notably a control unit of the appliance, may be configured to initiate the operation of the motor for driving the rotatable tool.

The control unit, e.g., a microcontroller, of the appliance is configured to generate a control signal for controlling the relay, in particular for closing the relay. The control signal may be an alternating signal which alternates between HIGH and LOW. In particular, the control signal may be a pulse width modulated (PWM) signal. The alternating control signal may be used to cause the relay to close, thereby activating the motor.

Furthermore, the appliance comprises a manual control element (such as a "Start" button or switch) which is configured to generate an edge within an actuation signal subject to actuation of the manual control element. The manual control element is part of a user interface of the appliance. The manual control element can be actuated by a user of the appliance to cause the motor to start operation.

The manual control element is configured to generate an actuation signal. The actuation signal may e.g., have the state LOW or HIGH. By way of example, the state of the actuation signal may be LOW, if the manual control element is in the state "OFF" (for preventing operation of the motor). On the other hand, the state of the actuation signal may be HIGH, if the manual control element is in the state "ON" (for causing the motor to operate). Actuation of the manual control element generates an edge within the actuation signal, e.g., a rising edge from LOW to HIGH (when the user changes the state of the manual control element from "OFF" to "ON"). On the other hand, actuation of the manual control element may generate a falling edge from HIGH to LOW (if the user changes the state of the manual control element from "ON" to "OFF").

The control circuit may be implemented on one or more printed circuit boards. The control circuit comprises an AND gate which is configured to forward the control signal at an input port of the AND gate to an output port of the AND gate, in dependence of the state of a safety signal. The AND gate comprises (at least or exactly) two input ports. The first input port may be configured is coupled to the control unit of the appliance for receiving the control signal that is generated by the control unit. In other words, the first input port of the AND gate is configured to receive the control signal from the control unit of the appliance. The second input port is used for receiving the safety signal.

The safety signal is generated by a latch of the control circuit. Hence, the second input port of the AND gate may be coupled to the output port of the latch of the control circuit. Furthermore, the output port of the AND gate is configured to be coupled to the relay for controlling the state of the relay.

Hence, an AND gate may be used for ensuring that the control signal for controlling the relay is only passed to the relay, if the state of the safety signal is HIGH. If the state of the safety signal at the second input port of the AND gate is HIGH, the signal at the output port of the AND gate may be equal to the (control) signal at the first input port of the AND gate. On the other hand, if the state of the safety signal at the second input port of the AND gate is LOW, the output port of the AND gate may be a constant LOW, which may cause the relay to be open, thereby preventing the motor to operate.

The control circuit further comprises the latch which is configured to set the state of the safety signal at the output port of the latch. In particular, the latch may be configured to set the state of the safety signal in dependence of the presence of an edge within the actuation signal at an input port of the latch. In a preferred example, the latch comprises or is a D-Flip-Flop.

Hence, a latch may be used to set the state of the safety signal to HIGH if, in particular only if, an edge is detected within the actuation signal (which indicates that the manual control element has been actuated by a user of the appliance).

Overall, a control circuit is provided which is configured to prevent the control signal of the control unit to be provided to the relay, as long as no actuation of the manual control element of the appliance has been detected. As a result of this, an unattended start of the motor of the appliance (e.g., due to a software update within the control unit of the appliance) can be prevented in a reliable manner.

The actuation signal may be applied to a clock input port of the latch (notably when using a D-Flip-Flop). Furthermore, a data input port of the latch may be constantly set to HIGH. As a result of this, the state of the safety signal at the output port of the latch may be controlled in a particularly reliable manner.

The latch may be configured to set the safety signal to HIGH, if, in particular only if, the actuation signal comprises a rising edge from LOW to HIGH. As indicated above, the rising edge of the actuation signal may correspond to an actuation of the manual control element when changing the manual control element from the "OFF" state to the "ON" state. As a result of this, a particularly safe operation of the motor may be achieved.

The latch may comprise a reset input port for receiving a reset signal. The reset signal may be generated by the control unit of the appliance. The reset input port of the latch may be configured to be coupled to the control unit for receiving the reset signal.

The latch may be configured to set the state of the safety signal at the output port of the latch in dependence of the presence of an edge within the actuation signal at the input port (in particular at the clock input port) of the latch if, in particular only if, the reset signal is HIGH. In particular, the latch may be configured to set the safety signal to HIGH if, in particular only if, the reset signal at the reset input port is HIGH. On the other hand, the safety signal may be LOW (thereby preventing the AND gate to forward the control signal to the output port of the AND gate), if the reset signal at the reset input port is LOW.

Hence, an additional reset signal may be used to ensure that (a possibly erroneous) control signal is blocked by the control circuit from being passed to the relay. The control unit of the appliance may be configured to set the reset signal to LOW (e.g., during a SW update), in order to prevent an unattended start of the motor in a particularly reliable manner. On the other hand, the control unit may be configured to set the reset signal to HIGH (e.g., during normal operation of the appliance), in order to enable the activation of the motor.

The latch may be configured to set the safety signal to LOW regardless the presence of an edge within the actuation signal at the input port, in particular at the clock input port, of the latch if the reset signal is LOW. As a result of this, unattended actuation of the motor of the appliance may be prevented in a particularly reliable manner.

As indicated above, the control signal may be an alternating signal which alternates between LOW and HIGH periodically, e.g., with a frequency of 1kHz or higher. The control circuit may comprise a driving element which is coupled to the output port of the AND gate and which is configured to generate an alternating current through a control coil of the relay, based on the alternating control signal. The driving element may comprise a transistor which is opened and closed in dependence of the control signal at the output port of the AND gate for generating the alternating current through the control coil of the relay. By making use of a driving element for driving the relay, the relay may be opened or closed in a particularly reliable manner, thereby controlling operation of the motor in a reliable manner.

The control signal may be an electric signal which alternates between a reference voltage and a logic voltage. The reference voltage may correspond to the LOW state and the logic voltage may correspond to the HIGH voltage. The alternating current may be an electric signal which alternates between the reference voltage and a drive voltage, wherein the drive voltage is typically higher than the logic voltage. By way of example, the logic voltage is at 5V and the drive voltage is at 12V. By making use of a drive voltage which is higher than the logic voltage, the relay may be controlled in a particularly reliable manner.

According to the present invention, a household appliance, in particular a kitchen and/or a cooking appliance, is described. The appliance comprises a motor for driving a tool of the appliance, wherein the tool may be located within a receptacle of the appliance. Furthermore, the appliance comprises a relay which is configured to couple the motor with a power supply (e.g., with the mains supply) for activating the motor. In addition, the appliance comprises a control unit which is configured to generate a control signal for controlling the relay Furthermore, the appliance comprises a manual control element which is configured to generate an edge within an actuation signal, subject to actuation of the manual control element by a user of the appliance. The appliance further comprises the control circuit described herein, which is configured to control the relay.

The control unit is configured to determine that the motor is to be activated. As indicated above, the appliance may be configured to provide a guided cooking functionality based on recipe data regarding a recipe for a food item which is to be cooked using the appliance. The control unit is configured to determine that the motor is to be activated based on the recipe data. Furthermore, the control unit is configured to generate a control signal for closing the relay, if it has been determined that the motor is to be activated. The control signal may be an alternating electrical signal.

In addition, the control unit is configured to cause an instruction to the user to be output via a user interface of the appliance, in reaction to determining that the motor is to be activated. The instruction may be directed at causing the user to actuate the manual control element for activating the motor. By way of example, a text instruction may be output on a display of the appliance. Alternatively, or in addition, a speech instruction may be output via a loudspeaker of the appliance.

Hence, the user of the appliance may be instructed to actuate the manual control element (e.g., for changing the manual control element from the state "OFF" to the state "ON"). By doing this, an unattended start of the motor of the appliance may be prevented in a reliable manner.

As indicated above, the control circuit is configured to forward the control signal to the driving element for controlling the relay if, in particular only if, a reset signal is set (in particular, is set to HIGH). The control unit is configured to set the reset signal (to HIGH) in reaction to determining that the motor is to be activated. Hence, for operating the motor, it may be required that the (alternating) control signal is generated and that the reset signal is set (to HIGH). By doing this, the safety of the appliance may be further increased.

The control unit is configured to determine that the motor is to be deactivated or is to be inactive. In reaction to this, generation of the control signal may be suspended and/or prevented. Furthermore, the reset signal may be set to LOW. As a result of this, unattended operation of the motor may be prevented in a particularly reliable manner.

The invention is explained below in an exemplary manner with reference to the accompanying drawings, wherein
Figure 1a shows a block diagram of a kitchen appliance, in particular of a cooking processor;
Figure 1b shows a perspective view of a kitchen appliance; and
Figure 2 shows a circuit for controlling the motor of a kitchen appliance.

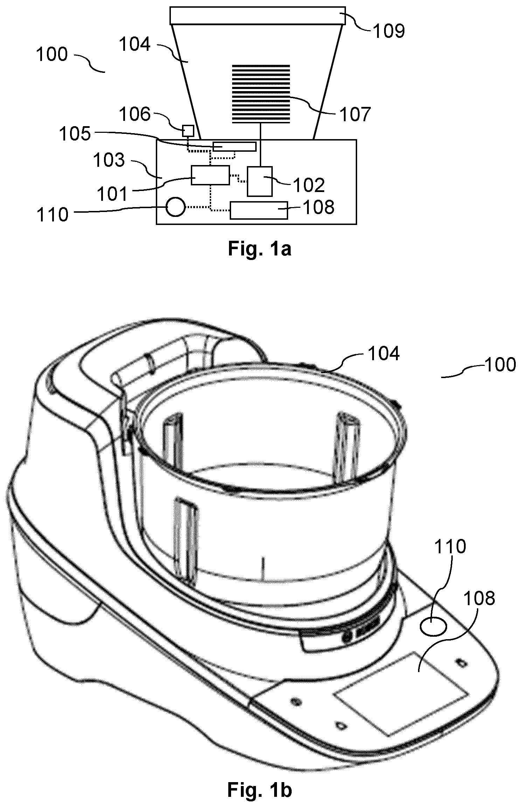

As outlined above, the present document is directed at increasing the safety of a kitchen appliance which comprises a motor for driving a tool or attachment of the appliance. In this context, Fig. 1a shows a block diagram of an example appliance 100 which comprises a base unit 103 onto which a receptacle 104, in particular a bowl, is placed. The receptacle 104 may be configured to be covered by a lid 109. The base unit 103 comprises a motor 102 which is configured to drive a tool 107 which is located within the receptable 104. The tool 107 may be detachable and/or exchangeable.

The appliance 100 may comprise a heating unit 106 (which may alternatively, or in addition, be integrated into the receptacle 104) for heating the receptacle 104, e.g., for allowing a food item to be cooked within the receptacle 104. Furthermore, the appliance 100 may comprise a weighing unit 105 which is configured to measure the weight of the one or more food items which are placed within the receptacle 104 or onto the appliance 100 (since the weighting unit 105 may be integrated at the bottom of the appliance 100). In addition, the appliance 100 may comprise a user interface 108, 110 which allows a user to interact with the appliance 100, e.g., for activating or for deactivating the motor 102. The user interface 108, 110 may comprise a manual control element 110, e.g., a knob, which allows a user to turn on the motor 102 of the appliance 100. In addition, the appliance 100 may be connected to the internet, to another appliance and/or to a (smart) device via a (wireless) communication interface such as WLAN. A control unit 101 of the appliance 100 may be configured to operate the appliance 100, in particular the motor 102 and/or the heating unit 106, in dependence of a user input received via the user interface 108, 110 (of the appliance 100 or of a remote device).

Fig. 1b shows a perspective view of an exemplary appliance 100.

The control unit 101 of the appliance 100 may be configured to control the motor 102 in dependence of recipe data regarding a recipe for a food item. For turning on the motor 102, the control unit 101 may cause a relay of the appliance 100 to couple the motor 102 with a power supply, e.g., with the mains supply circuit, of the appliance 100.

The software (SW) which is running on the control unit 101 of the appliance 100 may be updated, e.g., via the communication interface of the appliance 100. The SW update may lead, e.g., during a transition period of the SW update procedure, to an undefined state of the control unit 101, which may cause the motor 102 of the appliance 100 to operate in an unsupervised manner.

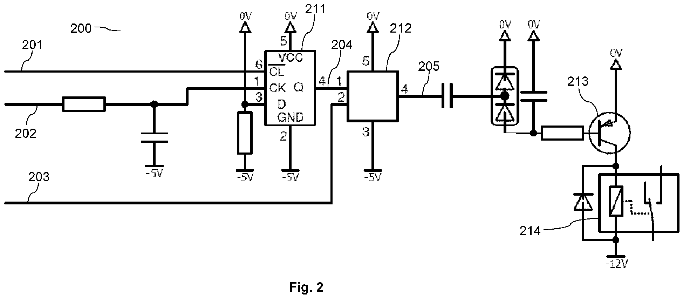

Fig. 2 illustrates a control circuit 200 for controlling the relay 214 of an appliance 100 in a particular secure manner. The control circuit 200 comprises an AND gate 212 which is configured to provide the control signal 205 for controlling the driver element 213 to close the relay 214. The control signal 205 may be PWM (pulse width modulated) signal which is configured to open and close the transistor of the driver element 213 in a periodic manner, thereby generating an alternating current through the coil of the relay 214, which generates the magnetic field for closing the relay 214.

The control signal 205 may be generated by the control unit 101, as indicated by the input control signal 203 entering the input port "2" of the AND gate 212. The input control signal 203 may be passed to the output port "4" of the AND gate 212 (thereby providing the control signal 205 for controlling the driver element 213), if, in particular only if, the safety signal 204 on the input port "1" of the AND gate 212 is HIGH.

The safety signal 204 may be dependent on an actuation of a manual control element 110 of the appliance 100. In particular, the control circuit 200 may be configured to generate the safety signal 204 such that the safety signal 204 is HIGH, if (possibly only if) the manual control element 110, e.g., the knob for turning ON or OFF the motor 102, has been actuated by a user. The control circuit 200 may comprise a Flip-Flop or latch 211, in particular a D-Flip-Flop, which is configured to generate the safety signal 204 in dependence of an actuation signal 202 which indicates an actuation of the manual control element 110 of the appliance 100. The actuation signal 202 may be coupled to the clock input "CK" of the latch 211. The data input "D" (port number "3") may be constantly set to HIGH. As a result of this, the latch 211 causes the output port Q, i.e., the safety signal 214, to go HIGH at the rising edge of the actuation signal 202. Hence, it can be ensured in combination with the AND gate 212 that the input control signal 203 is only passed to the driving element 213 subject to an actuation of the manual control element 110 (from OFF to ON).

The latch 211 may further comprise a reset input port (port number "6") which receives a reset signal 201. The reset signal 201 may be provided by the control unit 101. The reset signal 201 may be set to LOW during a SW updated of the control unit 101 and/or subsequent to finishing a guided cooking operation step. On the other hand, the reset signal 201 may be set to HIGH at the beginning and during a guided cooking operation step. If the reset signal 201 is LOW, then the safety signal 204 at the output port of the latch 211 is also LOW, regardless the state of the actuation signal 202. On the other hand, if the reset signal 201 is HIGH, then the safety signal 204 is set to HIGH, subject to a rising edge of the actuation signal 202, i.e., subject to actuation of the manual control element 110. By making use of the reset input port of the latch 211, the safety of the appliance 100 may be increased further.

The control unit 101 of the appliance 100 may be configured to cause the reset signal 201 to be LOW, whenever the operation of the motor 102 should be avoided, e.g., during a SW update or at the end of a guided cooking step which involved operation of the motor 102. Furthermore, the control unit 101 may be configured to cause the input control signal 203 to be constant (e.g., constantly LOW or constantly HIGH), whenever the operation of the motor 102 should be avoided. As a result of this, unattended operation of the motor 102 can be avoided in a particularly reliable manner.

On the other hand, if operation of the motor 102 is to be allowed, the reset signal 201 may be set to HIGH and a PWM input control signal 203 may be generated. Furthermore, a user indication may be output via the user interface 108, indicating to the user that the manual control element 110 should be actuated to start operation of the motor 102. The actuation of the manual control element 110 causes the actuation signal 202 to go from LOW to HIGH, and the rising edge of the actuation signal 202 causes the safety signal 204 at the output port of the latch 211 to go HIGH, thereby allowing the input control signal 203 to pass through the AND gate 212.

An erroneous operation of the control unit 101 during a SW update may lead to a situation where a PWM input control signal 203 is generated and/or where the reset signal 201 is set HIGH. This, however, does not lead to an unattended operation of the motor 102, because the safety signal 204 is only set HIGH in reaction to a rising edge of the actuation signal 202, i.e., in reaction to the user actuating the manual control element 202. Hence, an unattended and/or unintended operation of the motor 102 can be avoided in a reliable manner.

It should be noted that the description and drawings merely illustrate the principles of the proposed solution.The scope of the present invention is defined by the appended claims. Furthermore, all examples and embodiment outlined in the present document are principally intended expressly to be only for explanatory purposes to help the reader in understanding the principles of the invention.

## Claims

1. A household appliance (100) which comprises,
- a motor (102) for driving a tool (107) of the appliance (100);
- a relay (214) configured to couple the motor (102) with a power supply for activating the motor (102);
- a control unit (101) configured to generate a control signal (203) for controlling the relay (214);
- a manual control element (110) configured to generate an edge within an actuation signal (202) subject to actuation of the manual control element (110) by a user of the appliance (100); wherein the control unit (101) is configured to
- determine that the motor (102) is to be activated;
- in reaction to this, generate the control signal (203) for closing the relay (214);
- cause an instruction to the user to be output via a user interface (108) of the appliance (100), in reaction to determining that the motor (102) is to be activated; wherein the instruction is directed at causing the user to actuate the manual control element (108) for activating the motor (102); and
- a control circuit (200) configured to control the relay (214) for activating the motor (102) of the appliance (100); wherein the control circuit (200) comprises,
- an AND gate (212) configured to forward the control signal (203) at an input port of the AND gate (212) to an output port of the AND gate (212) in dependence of a state of a safety signal (204); wherein the output port of the AND gate (212) is coupled to the relay (214); and
- a latch (211) configured to set the state of the safety signal (204) at an output port of the latch (211) in dependence of the presence of an edge within the actuation signal (202) at an input port of the latch (211).

2. The household appliance (100) of claim 1, wherein the latch (211) is configured to set the safety signal (204) to HIGH, if, in particular only if, the actuation signal (202) comprises a rising edge from LOW to HIGH.

3. The household appliance (100) of any previous claims, wherein
- the latch (211) comprises a reset input port for receiving a reset signal (201), in particular a reset signal (201) which has been generated by the control unit (101); and
- the latch (211) is configured to set the state of the safety signal (204) at the output port of the latch (211) in dependence of the presence of an edge within the actuation signal (202) at the input port of the latch (211) if, in particular only if, the reset signal (201) is HIGH.

4. The household appliance (100) of claim 3, wherein the latch (211) is configured to set the safety signal (204) to LOW regardless the presence of an edge within the actuation signal (202) at the input port of the latch (211) if the reset signal (201) is LOW.

5. The household appliance (100) of any previous claims, wherein
- the control signal (203, 205) is an alternating signal which alternates between HIGH and LOW; and
- the control circuit (200) comprises a driving element (213) which is coupled to the output port of the AND gate (212) and which is configured to generate an alternating current for a control coil of the relay (214) based on the alternating control signal (203, 205).

6. The household appliance (100) of claim 5, wherein the driving element (213) comprises a transistor which is opened and closed in dependence of the control signal (203, 205) at the output port of the AND gate (212) for generating the alternating current for the control coil of the relay (214).

7. The household appliance (100) of any of claims 5 to 6, wherein
- the control signal (203, 205) is an electric signal which alternates between a reference voltage and a logic voltage;
- the alternating current is an electric signal which alternates between the reference voltage and a drive voltage; and
- the drive voltage is higher than the logic voltage.

8. The household appliance (100) of any previous claims, wherein
- the latch (211) comprises a D-Flip-Flop;
- the actuation signal (202) is applied to a clock input port of the latch (211); and
- a data input port of the latch (211) is constantly set to HIGH.

9. The household appliance (100) of any previous claims, wherein
- the control circuit (200) is configured to forward the control signal (203) to a driving element (213) for controlling the relay (214) if, in particular only if, a reset signal (201) is set; and
- the control unit (101) is configured to set the reset signal (201) in reaction to determining that the motor (102) is to be activated.

10. The household appliance (100) of any previous claims, wherein
- the appliance (110) is configured to provide a guided cooking functionality based on recipe data regarding a recipe for a food item which is to be cooked using the appliance (100); and
- the control unit (101) is configured to determine that the motor (102) is to be activated based on the recipe data.

11. The household appliance (100) of any previous claims, wherein the control unit (101) is configured to
- determine that the motor (102) is to be deactivated or is to be inactive; and
- in reaction to this, suspend or prevent generation of the control signal (203).

12. The household appliance (100) of any previous claims, wherein
- the appliance (110) comprises a receptacle (104) with a rotatable tool (107); and/or
- the appliance (110) is a kitchen appliance, in particular a guided cooking appliance.

## Patentansprüche

1. Haushaltsgerät (100), das Folgendes umfasst:
- einen Motor (102) zum Antreiben eines Werkzeugs (107) des Geräts (100),
- ein Relais (214), das so ausgelegt ist, dass es zum Einschalten des Motors (102) den Motor (102) mit einer Stromversorgung koppelt,
- eine Steuereinheit (101), die so ausgelegt ist, dass sie ein Steuersignal (203) zum Steuern des Relais (214) erzeugt,
- ein manuelles Bedienelement (110), das so ausgelegt ist, dass es, sofern es von einem Benutzer des Geräts (100) betätigt wird, in einem Betätigungssignal (202) eine Flanke erzeugt, wobei die Steuerschaltung (101) so ausgelegt ist, dass sie:
- bestimmt, dass der Motor (102) eingeschaltet werden muss,
- daraufhin das Steuersignal (203) zum Schließen des Relais (214) erzeugt,
- sofern sie bestimmt, dass der Motor (102) eingeschaltet werden muss, das Ausgeben einer Anweisung für den Benutzer über eine Benutzerschnittstelle (108) des Gerätes (100) veranlasst, wobei die Anweisung darauf ausgerichtet ist, den Benutzer dazu zu veranlassen, das manuelle Bedienelement (108) zum Einschalten des Motors (102) zu betätigen, und
- eine Steuerschaltung (200), die so ausgelegt ist, dass sie das Relais (214) zum Einschalten des Motors (102) des Gerätes (100) steuert, wobei die Steuerschaltung (200) Folgendes umfasst:
- ein UND-Gatter (212), das so ausgelegt ist, dass es das Steuersignal (203) an einem Eingang des UND-Gatters (212) in Abhängigkeit von einem Zustand eines Sicherheitssignals (204) zu einem Ausgang des UND-Gatters (212) weiterleitet, wobei der Ausgang des UND-Gatters (212) mit dem Relais (214) gekoppelt ist, und
- ein Latch (211), das so ausgelegt ist, dass es den Zustand des Sicherheitssignals (204) an einem Ausgang des Latch (211) in Abhängigkeit vom Vorliegen einer Kante in dem Betätigungssignal (202) an einem Eingang des Latch (211) festlegt.

2. Haushaltsgerät (100) nach Anspruch 1, wobei das Latch (211) so ausgelegt ist, dass es das Sicherheitssignal (204) auf HIGH setzt, wenn - insbesondere nur dann, wenn - das Betätigungssignal (202) eine von LOW auf HIGH steigende Flanke umfasst.

3. Haushaltsgerät (100) nach einem der vorhergehenden Ansprüche, wobei
- das Latch (211) einen Rücksetzeingang zum Empfangen eines Rücksetzsignals (201), insbesondere eines Rücksetzsignals (201) umfasst, das von der Steuereinheit (101) erzeugt wurde, und
- das Latch (211) so ausgelegt ist, dass es den Zustand des Sicherheitssignals (204) an seinem Ausgang in Abhängigkeit vom Vorliegen einer Kante in dem Betätigungssignal (202) an seinem Eingang festlegt, wenn - insbesondere nur dann, wenn - das Rücksetzsignal (201) HIGH ist.

4. Haushaltsgerät (100) nach Anspruch 3, wobei das Latch (211) so ausgelegt ist, dass es das Sicherheitssignal (204) unabhängig vom Vorliegen einer Flanke in dem Betätigungssignal (202) an seinem Eingang auf LOW setzt, wenn das Rücksetzsignal (201) LOW ist.

5. Haushaltsgerät (100) nach einem der vorhergehenden Ansprüche, wobei
- es sich bei dem Steuersignal (203, 205) um ein Wechselsignal handelt, das zwischen HIGH und LOW wechselt, und
- die Steuerschaltung (200) ein Ansteuerelement (213) umfasst, das mit dem Ausgang des UND-Gatters (212) gekoppelt und so ausgelegt ist, dass es auf der Grundlage des wechselnden Steuersignals (203, 205) einen Wechselstrom für eine Steuerspule des Relais (214) erzeugt.

6. Haushaltsgerät (100) nach Anspruch 5, wobei das Ansteuerelement (213) einen Transistor zum Erzeugen des Wechselstroms für die Steuerspule des Relais (214) umfasst, der in Abhängigkeit von dem Steuersignal (203, 205) am Ausgang des UND-Gatters (212) geöffnet und geschlossen wird.

7. Haushaltsgerät (100) nach einem der Ansprüche 5 bis 6, wobei
- es sich bei dem Steuersignal (203, 205) um ein elektrisches Signal handelt, das zwischen einer Referenzspannung und einer Logikspannung wechselt,
- es sich bei dem Wechselstrom um ein elektrisches Signal handelt, das zwischen der Referenzspannung und einer Ansteuerspannung wechselt, und
- die Ansteuerspannung höher ist als die Logikspannung.

8. Haushaltsgerät (100) nach einem der vorhergehenden Ansprüche, wobei
- das Latch (211) ein D-Flipflop umfasst,
- das Betätigungssignal (202) an einen Takteingang des Latch (211) angelegt wird und
- ein Dateneingang des Latch (211) dauerhaft auf HIGH gesetzt ist.

9. Haushaltsgerät (100) nach einem der vorhergehenden Ansprüche, wobei
- die Steuerschaltung (200) so ausgelegt ist, dass sie das Steuersignal (203) zu einem Ansteuerelement (213) zum Steuern des Relais (214) weiterleitet, wenn - insbesondere nur dann, wenn - ein Rücksetzsignal (201) gesetzt ist, und
- die Steuereinheit (101) so ausgelegt ist, dass sie, sofern sie bestimmt, dass der Motor (102) eingeschaltet werden muss, das Rücksetzsignal (201) setzt.

10. Haushaltsgerät (100) nach einem der vorhergehenden Ansprüche, wobei
- das Gerät (110) so ausgelegt ist, dass es auf der Grundlage von Rezeptdaten zu einem Rezept für ein Lebensmittel, das mithilfe des Gerätes (100) gekocht werden soll, eine Kochanleitungsfunktion anbietet, und
- die Steuereinheit (101) so ausgelegt ist, dass sie auf der Grundlage der Rezeptdaten bestimmt, dass der Motor (102) eingeschaltet werden muss.

11. Haushaltsgerät (100) nach einem der vorhergehenden Ansprüche, wobei die Steuereinheit (100) so ausgelegt ist, dass sie
- bestimmt, dass der Motor (102) ausgeschaltet werden muss oder nicht aktiv sein soll, und
- daraufhin das Erzeugen des Steuersignals (203) unterbricht oder verhindert.

12. Haushaltsgerät (100) nach einem der vorhergehenden Ansprüche, wobei
- das Gerät (110) ein Behältnis (104) mit einem drehbaren Werkzeug (107) umfasst und/oder
- es sich bei dem Gerät (110) um ein Küchengerät, insbesondere ein Gerät zum Kochen unter Anleitung handelt.

## Revendications

1. Appareil électroménager (100) qui comprend :
- un moteur (102) pour entraîner un outil (107) de l'appareil (100),
- un relais (214) configuré pour coupler le moteur (102) à une alimentation électrique pour actionner le moteur (102),
- une unité de commande (101) configurée pour générer un signal de commande (203) pour commander le relais (214),
- un élément de commande manuel (110) configuré pour générer un front dans un signal d'actionnement (202) soumis à un actionnement de l'élément de commande manuel (110) par un utilisateur de l'appareil (100), dans lequel l'unité de commande (101) est configurée pour :
- déterminer que le moteur (102) doit être actionné,
- en réaction à cela, générer le signal de commande (203) pour fermer le relais (214),
- amener une instruction à être délivrée à l'utilisateur via une interface utilisateur (108) de l'appareil (100), en réaction à la détermination que le moteur (102) doit être actionné, dans lequel l'instruction vise à amener l'utilisateur à actionner l'élément de commande manuel (108) pour actionner le moteur (102), et
- un circuit de commande (200) configuré pour commander le relais (214) pour actionner le moteur (102) de l'appareil (100), dans lequel le circuit de commande (200) comprend :
- une porte ET (212) configurée pour transmettre le signal de commande (203) au niveau d'un port d'entrée de la porte ET (212) jusqu'à un port de sortie de la porte ET (212) en fonction d'un état d'un signal de sécurité (204),
dans lequel le port de sortie de la porte ET (212) est couplé au relais (214), et
- une bascule (211) configurée pour régler l'état du signal de sécurité (204) au niveau d'un port de sortie de la bascule (211) en fonction de la présence d'un front dans le signal d'actionnement (202) au niveau d'un port d'entrée de la bascule (211).

2. Appareil électroménager (100) selon la revendication 1, dans lequel la bascule (211) est configurée pour régler le signal de sécurité (204) à l'état HAUT si, en particulier seulement si, le signal d'actionnement (202) présente un front montant de l'état BAS à l'état HAUT.

3. Appareil électroménager (100) selon l'une quelconque des revendications précédentes, dans lequel :
- la bascule (211) comprend un port d'entrée de réinitialisation pour recevoir un signal de réinitialisation (201), en particulier un signal de réinitialisation (201) qui a été généré par l'unité de commande (101), et
- la bascule (211) est configurée pour régler l'état du signal de sécurité (204) au niveau du port de sortie de la bascule (211) en fonction de la présence d'un front dans le signal d'actionnement (202) au niveau du port d'entrée de la bascule (211) si, en particulier seulement si, le signal de réinitialisation (201) est à l'état HAUT.

4. Appareil électroménager (100) selon la revendication 3, dans lequel la bascule (211) est configurée pour régler le signal de sécurité (204) à l'état BAS indépendamment de la présence d'un front dans le signal d'actionnement (202) au niveau du port d'entrée de la bascule (211) si le signal de réinitialisation (201) est à l'état BAS.

5. Appareil électroménager (100) selon l'une quelconque des revendications précédentes, dans lequel :
- le signal de commande (203, 205) est un signal alternatif qui alterne entre un état HAUT et un état BAS,
- le circuit de commande (200) comprend un élément d'attaque (213) qui est couplé au port de sortie de la porte ET (212), et qui est configuré pour générer un courant alternatif pour une bobine de commande du relais (214) sur la base du signal de commande alternatif (203, 205).

6. Appareil électroménager (100) selon la revendication 5, dans lequel l'élément d'attaque (213) comprend un transistor qui est ouvert et fermé en fonction du signal de commande (203, 205) au niveau du port de sortie de la porte ET (212) pour générer le courant alternatif pour la bobine de commande du relais (214).

7. Appareil électroménager (100) selon l'une quelconque des revendications 5 à 6, dans lequel :
- le signal de commande (203, 205) est un signal électrique qui alterne entre une tension de référence et une tension logique,
- le courant alternatif est un signal électrique qui alterne entre la tension de référence et une tension d'attaque, et
- la tension d'attaque est supérieure à la tension logique.

8. Appareil électroménager (100) selon l'une quelconque des revendications précédentes, dans lequel :
- la bascule (211) comprend une bascule D-Flip-Flop,
- le signal d'actionnement (202) est appliqué à un port d'entrée d'horloge de la bascule (211), et
- un port d'entrée de données de la bascule (211) est défini constamment à l'état HAUT.

9. Appareil électroménager (100) selon l'une quelconque des revendications précédentes, dans lequel :
- le circuit de commande (200) est configuré pour transmettre le signal de commande (203) à un élément d'attaque (213) pour commander le relais (214) si, en particulier seulement si, un signal de réinitialisation (201) est défini, et
- l'unité de commande (101) est configurée pour définir le signal de réinitialisation (201) en réaction à la détermination que le moteur (102) doit être actionné.

10. Appareil électroménager (100) selon l'une quelconque des revendications précédentes, dans lequel :
- l'appareil (110) est configuré pour fournir une fonctionnalité de cuisine guidée sur la base de données de recette concernant une recette pour un aliment qui doit être cuisiné en utilisant l'appareil (100), et
- l'unité de commande (101) est configurée pour déterminer que le moteur (102) doit être actionné sur la base de données de recette.

11. Appareil électroménager (100) selon l'une quelconque des revendications précédentes, dans lequel l'unité de commande (101) est configurée pour :
- déterminer que le moteur (102) doit être désactivé ou doit être inactif, et
- en réaction à cela, suspendre ou empêcher une génération du signal de commande (203).

12. Appareil électroménager (100) selon l'une quelconque des revendications précédentes, dans lequel :
- l'appareil (110) comprend un réceptacle (104) comportant un outil rotatif (107), et/ou
- l'appareil (110) est un robot de cuisine, en particulier un robot de cuisine guidé.
